## Europäisches Patentamt
## European Patent Office
## Office européen des brevets

(11) Publication number: **0 086 912**
**A1**

# EUROPEAN PATENT APPLICATION

(21) Application number: **82302084.7**

(22) Date of filing: **23.04.82**

(51) Int. Cl.³: **G 01 F 11/06**

(30) Priority: **05.02.82 GB 8203312**

(43) Date of publication of application:
**31.08.83 Bulletin 83/35**

(84) Designated Contracting States:
**AT BE CH DE FR GB IT LI LU NL SE**

(71) Applicant: **Jencons (Scientific) Limited**
**Cherrycourt Way Industial Estate Stanbridge Road**
**Leighton Buzzard Bedfordshire(GB)**

(72) Inventor: **Williams, Martin J. A. Coombe Hill Farm**
**Cottage**
**Missenden Road Butlers Cross**
**Nr Wendover Buckinghamshire HP17 OUP(GB)**

(72) Inventor: **Gabb, Eric John**
**31 Trebellan Drive**
**Hemel Hempstead Hertfordshire(GB)**

(74) Representative: **Nash, Keith Wilfrid et al,**
**KEITH W. NASH & Co. Pearl Assurance House 90-92**
**Regent Street**
**Cambridge CB2 1DP(GB)**

(54) Liquid dispensing devices.

(57) A liquid dispensing device has a cylinder 3 within which is slidable a plunger 5 urged to an extended position by a spring 16. A rod 10 is threaded into the plunger 5 and carries an adjustment knob 13, rotation of which varies the volume swept by the plunger 5 in a successive pressure stroke. The end of the pressure stroke is defined by the plunger head 6 engaging the base 33 of the cylinder 3. The plunger 5 carries a pointer 20 co-operating with a scale marked on the outer casing 1 to indicate the volume of liquid dispensed, this being determined by the adjusted position of the knob 13.

FIG.1a

0086912

C66/J

Title:   Liquid Dispensing Devices

DESCRIPTION

Field of invention

This invention relates to liquid dispensing devices,
particularly the sort which are intended to be fitted into
the mouth of a container holding the liquid to be
dispensed.

Such dispensing devices are frequently used in
laboratories and should be capable of dispensing accurate
volumes of liquids which may be highly corrosive or
aggressive acids or solvents.  Known liquid dispensing
devices incorporate a plunger which is movable within a
cylinder so as to be capable of undergoing pressure and
suction strokes in order first to draw up the required
volume of liquid into the cylinder and then to expel the
liquid from the cylinder·into a vessel such as a test tube
or conical flask.  The invention aims to provide such a
liquid dispensing device in which the end limits of movement
of the plunger are defined in a novel manner.

According to the invention a liquid dispensing device
comprises an outer casing, a cylinder which at one end
thereof is slidably received within the outer casing and
which at the other end has an opening for the passage of
liquid to be dispensed, a plunger slidable within the
cylinder between extended and inserted positions to undergo
pressure and suction strokes, spring means urging the
plunger away from said other end of the cylinder to the
extended position, stop means limiting movement of the plunger in the direction away from said other end of the cylinder and defining the extended position of the plunger, adjustment means for altering the extended position of the plunger with respect to the cylinder, and indicator means the position of which is representative of the adjusted extended position of the plunger so that the indicator means indicates the volume swept by the plunger and therefore the volume of liquid dispensed by the device in each dispensing operation, the outer casing and the plunger being depressible, against the spring means, to cause the plunger to undergo a pressure stroke the end limit of which defines the inserted position and is caused by the plunger engaging the other end of the cylinder. Hence, in the inventive liquid dispensing device, the end of the pressure stroke is defined by the plunger physically engaging the other end of the cylinder which in the normal mode of operation will be the lower end of the cylinder.

The stop means may be formed by an external projection on the cylinder and an internal projection on the outer casing, these two projections interengaging to limit movement of the plunger away from the other end of the cylinder. These projections may be formed by an externally projecting annular shoulder formed on the outer periphery of an inner casing surrounding and protecting the cylinder, and by an inwardly projecting shoulder formed on the end of the outer casing. The spring means may act between the annular shoulder on the inner casing and the plunger.

The adjustment means conveniently comprise a rod which is threaded into the plunger, the rod being rotatable with respect to the outer casing and the plunger being prevented from rotatable movement with respect to the outer casing. The rod may extend through an end cap of the outer casing and carry at its projecting end a knob or wheel shaped for ease of turning. Thus, as the knob or wheel is turned, the rod rotates and causes axial movement of the plunger within the cylinder so as to adjust the extended position of the plunger within the cylinder. By this means the volume of liquid dispensed during each dispensing operation of the device can be altered.

The indicator means may comprise a pointer which is movable with the plunger, the pointer cooperating with a scale formed on the outside of the outer casing. Preferably, the pointer is attached to a carrier which projects through a slot in the outer casing. In this case, the carrier and the pointer mounted thereon act to prevent the plunger rotating within the outer casing during adjustment of the adjustment means.

Where the device is intended to dispense hydrofluoric acid, which degrades glass, the cylinder the plunger and other parts contacting the dispensed liquid are made of polytetrafluoroethylene (P.T.F.E.).

In an alternative embodiment, the spring means act between the outer casing and one end of the cylinder: the adjustment means is in the form of a threaded side rod and the stop means is in the form of an adjustable stop member, the threaded side rod being threaded into the adjustable stop member which is disposed within the cylinder and formed for sliding but nonrotatable movement with respect to the plunger. As before, the upper end of the side rod is conveniently brought through the end of an end cap and terminates in an adjustment knob or wheel rotation of which alters the position of the plunger within the cylinder so as to alter the fully extended or rest position of the plunger. In this alternative embodiment, the indicator means are preferably formed by a scale marked on an inner casing which surrounds and protects the cylinder, the lower edge of the outer casing co-operating with the scale to indicate the volume of liquid which will be dispensed in each dispensing operation of the device.

A device according to the invention will normally have, at the lower or said other end of the cylinder, a bottle adaptor to enable the device to be detachably mounted in the mouth of a container holding the liquid to be dispensed. Below the bottle adaptor there will normally be arranged one-way inlet and outlet valves which open and close alternately on suction and pressure strokes in order to enable liquid first to be drawn into the cylinder on a suction stroke of the plunger and then expelled from the cylinder by a pressure stroke of the plunger.

Three embodiments of liquid dispensing device according to the invention will now be described, by way of example, with reference to the accompanying drawings, in which:-

Figure 1, consisting of Figures 1a and 1b, is a sectional view showing the preferred embodiment of liquid dispensing device;

Figure 2 is a side elevation, looking in the direction of arrow X in Figure 1a;

Figure 3 is a sectional view showing the second embodiment, which is a modified construction suitable for dispensing hydrofluoric acid, and

Figure 4 corresponds to Figure 1a but shows the third embodiment of liquid dispensing device according to the invention.

Detailed description of drawings.

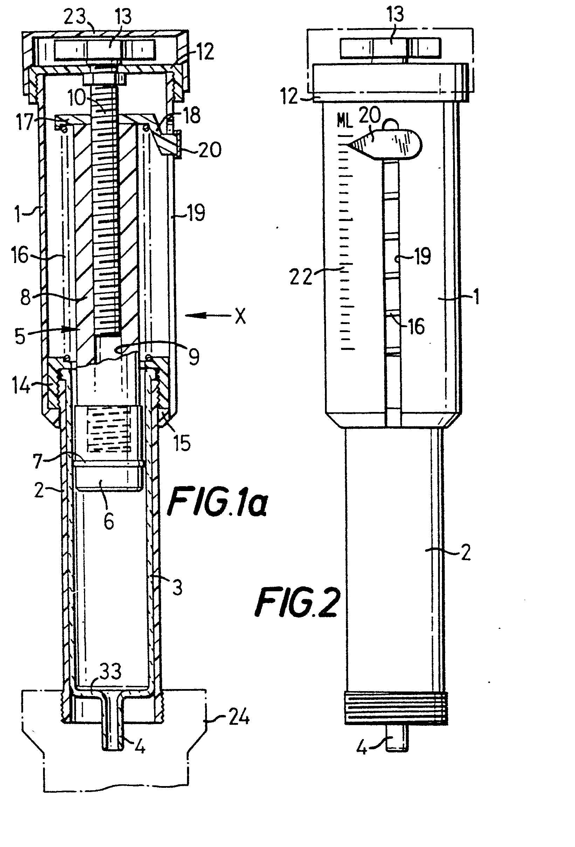

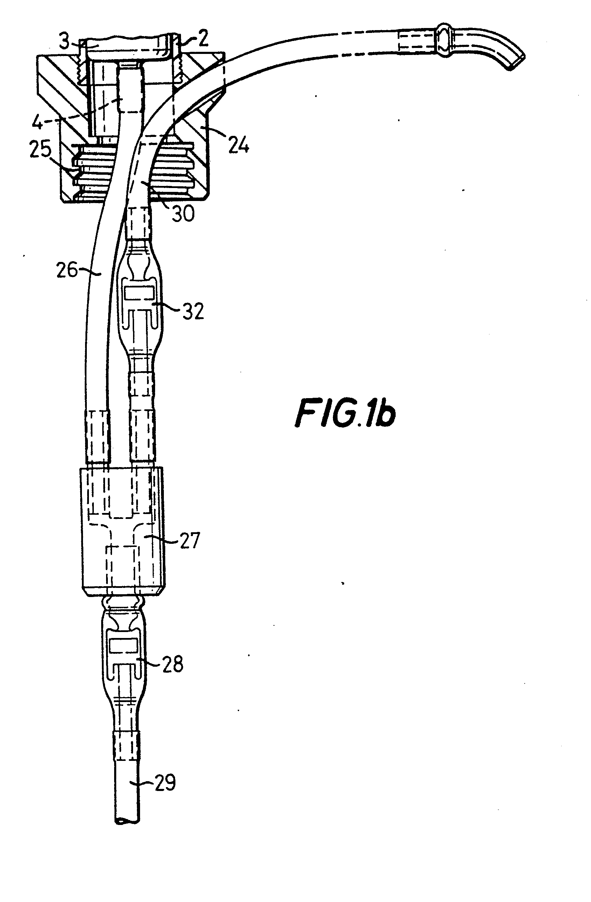

Referring to Figures 1a and 1b the first embodiment of device comprises an outer cylindrical casing 1 within which is slidably mounted an inner casing 2 which surrounds and protects a glass cylinder or barrel glass 3. The casings 1 and 2 are of a synthetic plastics material. The lower end of the glass cylinder 3 is formed with an opening or nozzle 4 for the passage of liquid to be dispensed. Within the glass cylinder 3 is slidably mounted a plunger 5 having a plastics plunger head 6 sealed with respect to the glass cylinder by means of an O-ring 7, and a plastics plunger body 8 which extends upwardly into the internal space within the outer casing 1. The plunger body 8 is formed with a longitudinal threaded bore 9 into which is threaded the lower end of a screwed plastics rod 10 the upper end of which passes through a plastics cap 12 screwed onto the upper end of the outer casing 1. The upper end of the threaded rod 10 carries a plastics adjusting knob 13 shaped for ease of turning.

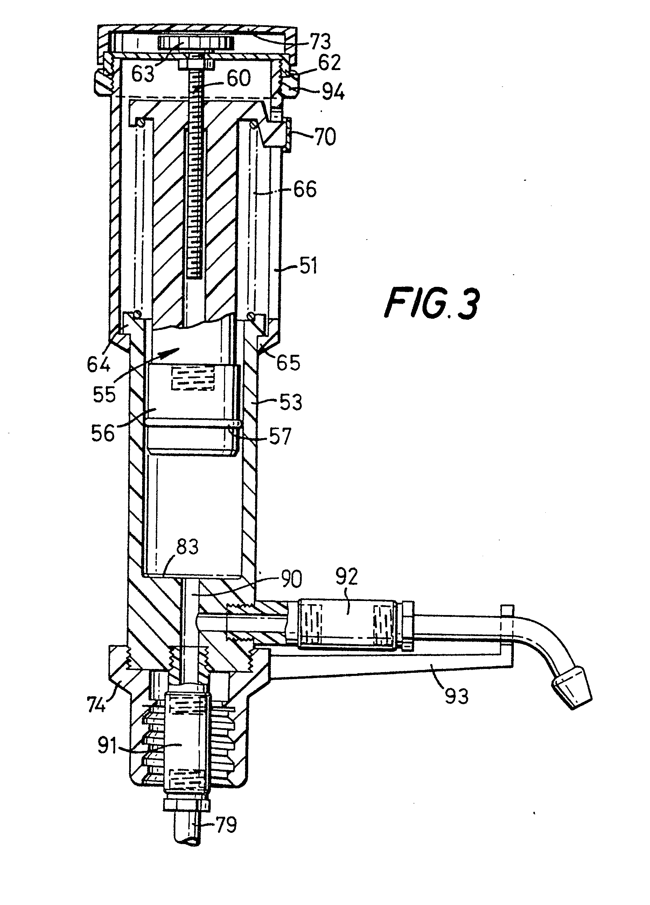

An annular stop ring 14 is threaded onto the upper end of the inner casing 2, and this stop ring 14 abuts an inwardly projecting annular shoulder or flange 15 on the lower end of the outer casing 1 in order to define the fully withdrawn or extended position of the plunger 5. The plunger 5 is urged to this fully withdrawn position by means of a helical spring 16 which surrounds the upper end of the plunger body 8 and which acts between the stop ring 14 and a projecting shoulder 17 formed on or attached to the upper end of the plunger body 8. This shoulder 17 is extended on one side to form a carrier 18 which projects through a longitudinal slot 19 (best seen in Figure 2) formed in the outer casing 1. The carrier 18 carries a clip-on pointer 20 co-operating with scale graduations 22 marked on the outer surface of the outer casing 1.

A plastics cover cap 23 (Figure 1a) is provided to cover and prevent accidental movement of the adjustment knob 13, the cover cap 23 fitting over the end cap 12. At the lower end of the cylinder 3, the inner casing 2 is attached to a bottle adaptor 24 threaded at 25 to receive the threaded neck of a container such as a bottle containing liquid to be dispensed. As can be seen from Figure 1b, the

nozzle 4 of the glass cylinder 3 is conventionally connected by means of a first length of inlet tube 26 to a connecting block 27 and thence via a one- way inlet valve 28 to a second length of inlet tube 29. The connecting block 27 communicates with an outlet tube 30 incorporating a one-way outlet valve 32. The end of the tube 30 remote from the valve 32 may be supported by a bracket extending horizontally from the bottle adaptor 25.

In use, the liquid dispensing device is fitted into the neck of a bottle by means of the bottle adaptor 24, the inlet tube portion 29 dipping into the liquid within the bottle. The setting of the adjustment knob 13 determines the rest or extended position of the plunger 5 with respect to the glass cylinder 3. When the pressure is applied to the cover cap 23, the cap 23, the outer casing 1, the plunger body 8 and the plunger head 6 move downwardly within the glass cylinder 3 to execute a pressure stroke. The end of the pressure stroke is defined by the plunger head 6 engaging the base 33 of the glass cylinder 3. Release of pressure on the cover cap 23 causes the plunger 5 to be moved back to its extended position so as to undergo a suction stroke by the spring 16. It will be understood that the extended position of the plunger is variable in dependence upon the setting of the adjustment knob 13, and the volume swept by the plunger head during each suction or pressure stroke is indicated by the pointer 20 and scale 22, the latter being marked in millilitres to show the volume of liquid dispensed in each dispensing operation.

The second embodiment, shown in Figure 3, is similar to that of Figures 1a and 1b but is modified to render the device suitable for dispensing hydrofluoric acid. Parts similar to those of Figures 1a and 1b bear the same reference numerals increased by fifty. Hydrofluoric acid degrades or attacks glass, and hence the glass cylinder 3 is replaced by a cylinder 53 made of polytetrafluoroethylene (P.T.F.E.). The plunger head 56 is also P.T.F.E. The cylinder 53 has, at its lower end, a passage 90 communicating directly with a dual check inlet valve 91 and dual check outlet valve 92 supported by an arm 93. The valve system is made of polypropylene and butyl rubber.

At its upper end, the outer casing 51 has threaded thereon a scale adjusting ring 94 which enables the pointer and scale to be calibrated to remove any datum or zero error. The remaining embodiments of Figures 1, 2 and 4 may have such a scale adjusting ring, if desired.

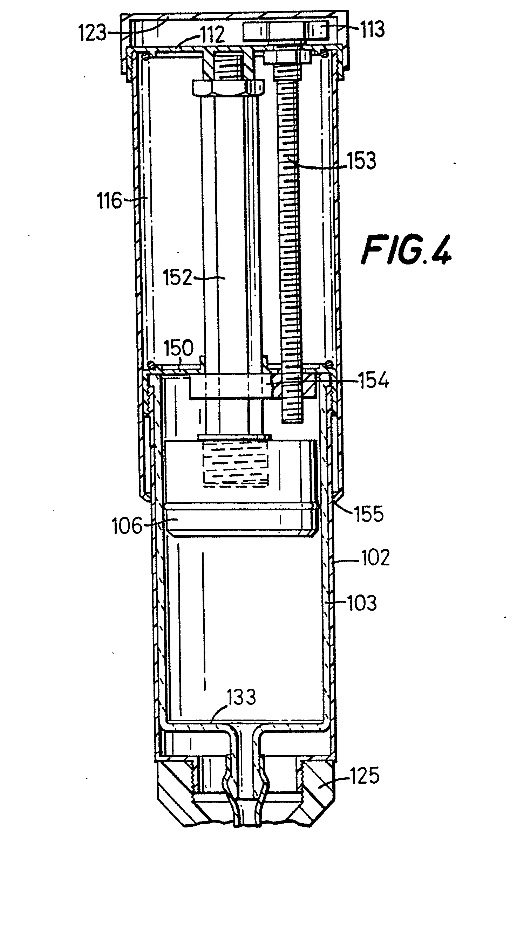

In the third embodiment shown in Figure 4, in which like parts to those of Figure 1 carry the same reference numerals increased by one hundred, the spring 116 acts between the end cap 112 and an end cap 150 threaded on the upper end of the inner casing 102. The plunger head 106 has attached thereto a plunger bar or rod 152 of hexagonal cross-section, the rod 152 extending through the cap 150 and being secured at its upper end to the cap 112. Also attached to the cap 112 is a threaded plastics side rod 153 which extends with clearance through the cap 150 and at its lower end is threaded onto an adjustable plastics stop member 154. The stop member 154 has a hexagonal aperture matching the shape of the rod 152 so that the stop member 154 is slidable but non-rotatable on the rod 152. It will be appreciated that rotation of the adjusting knob 113 alters the rest or extended position of the plunger head 106 with respect to the base 133 of the glass cylinder 103.

The lower edge 155 of the outer casing 101 co-operates with graduations marked on the inner casing 102 to indicate the volume of liquid dispensed. As before, the end of the pressure stroke of the plunger is defined by the plunger head 106 engaging the base 133 of the glass cylinder 103.

Claims.

1.  A liquid dispensing device comprising an outer casing, a cylinder which at one end thereof is slidably received within the outer casing and which at the other end has  an opening for the passage of liquid to be dispensed, a plunger slidable within the cylinder between extended and inserted positions to undergo pressure and suction strokes, spring means urging the plunger away from said other end of the cylinder to the extended position, stop means limiting movement of the plunger in the direction away from said other end of the cylinder and defining the extended position of the plunger, adjustment means for altering the extended position of the plunger with respect to the cylinder, and indicator means the position of which is representative of the adjusted extended position of the plunger so that the indicator means indicates the volume swept by the plunger and, therefore, the volume of liquid dispensed by the device in each dispensing operation, the outer casing and the plunger being depressible, against the spring means, to cause the plunger to undergo a pressure stroke the end limit of which defines the inserted position and is caused by the plunger engaging the other end of the cylinder.

2.  A liquid dispensing device according to claim 1, wherein the stop means are formed by an external projection on the cylinder and an internal projection on the outer casing, these two projections interengaging to limit movement of the plunger away from the other end of the cylinder.

3.  A liquid dispensing device according to claim 2, wherein the spring means act between the external projection on the cylinder and the plunger.

4.  A liquid dispensing device according to any of the preceding claims, wherein the adjustment means comprise a rod which is threaded into the plunger, the rod being rotatable with respect to the outer casing and the plunger being preventd from rotatable movement with respect to the outer casing .

5.   A liquid dispensing device according to claim 4, wherein the rod extends through an end cap of the outer casing and carryies at its projecting end a knob or wheel shaped for ease of turning, whereby the volume of liquid dispensed during each dispensing operation of the device can be altered by rotation of the knob or wheel.

6.   A liquid dispensing device according to any of the preceding claims, wherein the indicator means comprise a pointer which is movable with the plunger, the pointer co-operating with a scale formed on the outside of the outer casing.

7.   A liquid dispensing device according to claim 6, wherein the pointer is attached to a carrier which is attached to the plunger and which projects through a slot in the outer casing, the carrier and the pointer mounted thereon acting to prevent the plunger rotating relative to the outer casing.

8.   A liquid dispensing device according to any of the preceding claims, wherein the cylinder and at least the head of the plunger are made of polytetrafluoroethylene.

9.   A liquid dispensing device according to claim 1, wherein the spring means act between the outer casing and said one end of the cylinder, the adjustment means being in the form of a threaded side rod and the stop means being in the form of an adjustable stop member, the threaded side rod being threaded into the adjustable stop member which is disposed within the cylinder and formed for sliding but non-rotatable movement with respect to the plunger.

10.  A liquid dispensing device according to claim 9 wherein the indicator means are formed by a scale marked on an inner casing which surrounds and protects the cylinder, the lower edge of the outer casing co-operating with the scale to indicate the volume of liquid which will be dispensed in each dispensing operation of the device.

0086912

FIG.1a

FIG.2

FIG.1b

FIG.3

FIG.4

| | DOCUMENTS CONSIDERED TO BE RELEVANT | | EP 82302084.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X,Y | FR - A1 - 2 398 289 (OXFORD LABORATORIES)<br>* Page 1, lines 20-39 *<br>-- | 1,2,8 | G 01 F 11/06 |
| A<br>Y<br>A | DE - A1 - 2 343 687 (BRAND)<br>* Page 2, lines 7-15 *<br>* Page 2, lines 26-29 *<br>* Page 6, lines 12,13 *<br>-- | 1<br>2<br>8 | |
| Y | DE - A1 -2 743 911 (WALTER GRAF)<br>* Page 3, line 1 - page 4, line 5 *<br>-- | 8 | |
| A | DE - B2 - 2 735 967 (MARTEAU D'AUTRY)<br>* Fig. 1, pos. 46,68,52,36 *<br>-- | 1,9 | TECHNICAL FIELDS SEARCHED (Int. Cl. ³)<br><br>G 01 F |
| A | DE - A1 - 2 921 443 (FINNPIPETTE)<br>* Page 3, line 1 - page 4, line 28 *<br>---- | 1 | B 01 L |

| The present search report has been drawn up for all claims | | |
|---|---|---|
| Place of search<br>VIENNA | Date of completion of the search<br>08-06-1983 | Examiner<br>MELHARDT |